# FASCICULE DE BREVET EUROPEEN

(11) **EP 3 673 198 B1**
(45) Date de publication et mention de la délivrance du brevet: **03.11.2021**
(21) Numéro de dépôt: 18785694.3
(22) Date de dépôt: 22.08.2018
(51) Int. Cl.: F16L 59/065, E04B 1/80

(54) **ASSEMBLAGE À ISOLATION RENFORCÉE**
ANORDNUNG MIT VERBESSERTER ISOLIERUNG
ASSEMBLY WITH ENHANCED INSULATION

(30) Priorité: 22.08.2017 FR 1757791
(43) Date de publication de la demande: 01.07.2020
(73) Titulaire: Hutchinson, 75008 Paris (FR)
(72) Inventeur: CHOPARD, Fabrice, 38400 Saint Martin D'Heres (FR); HUILLET, Cédric, 45200 Montargis (FR)
(74) Mandataire: Ernest Gutmann - Yves Plasseraud S.A.S.
(86) Numéro de dépôt international: PCT/FR2018/052093
(87) Numéro de publication internationale: WO 2019/038508

(56) Documents cités:
- EP-A2- 1 647 758
- FR-A1- 3 040 211
- JP-A- 2011 190 925

## Description

La présente invention concerne le domaine de la gestion thermique par l'intermédiaire d'éléments isolant thermiques, voire de matériaux dont on utilise la chaleur latente, comme les matériaux MCP (matériau à changement ou transition de phase).

Les panneaux PIV (panneau isolant sous vide ; VIP en anglais) sont des isolants thermiques à conductivité thermique faible typiquement obtenue par un vide d'air, que l'on peut aussi définir comme une raréfaction de gaz, tel de l'air, ou plus généralement une « atmosphère contrôlée ». Les documents WO2011102337A1 et FR3040211A1 dévoilent de tels panneaux.

Par « PIV », on doit entendre une structure comprenant une enveloppe étanche contenant au moins un matériau isolant thermique a priori poreux.

Par « atmosphère contrôlée » le présent texte se réfère tant un vide d'air dans une enveloppe étanche que, dans une telle enveloppe, un gaz (tel le CO₂, ou l'Argon) ayant une conductivité thermique inférieure à celle de l'air ambiant (26mW/m.K). La porosité de l'isolant thermique n'est alors pas imposée.

« Poreux » désigne un matériau possédant des interstices permettant le passage de l'air ou d'un gaz. Les matériaux poreux, à cellules ouvertes, incluent donc les mousses mais également les matériaux fibreux (tels que la laine de verre ou de roche).

« Déformable » correspond à une structure que l'on peut déformer, par exemple plier, à la main.

Enveloppe extérieure « sous vide » indique que cette enveloppe est soit réellement sous vide (c'est-à-dire sous gaz, tel de l'air, raréfié ; donc à une pression inférieure à 10⁵ Pa), soit contient, en tant que dite atmosphère « contrôlée », un gaz ayant une conductivité thermique inférieure à celle de l'air ambiant.

« Paroi ou feuille » désignera un élément qui pourra typiquement être réalisé sous la forme d'un film multicouche comportant des films en polymères (PE et PET) seuls ou doublés d'aluminium sous forme par exemple laminée (feuille d'épaisseur de l'ordre d'une dizaine de micromètre) ou métallisée (dépôt sous vide d'un film de quelques dizaines de nanomètre). En alternative, cet élément pourra être comme une paroi ou feuille métallique (par exemple en aluminium) déformable, conformée par emboutissage ou pliage, et de un à quelques dixièmes de mm d'épaisseur.

Est ainsi en particulier ici visé un assemblage comprenant :
- au moins une première poche contenant un isolant thermique et dans laquelle règne une première atmosphère contrôlée, et
- au moins une deuxième poche qui entoure la première poche et dans laquelle règne une deuxième atmosphère contrôlée.

Pour obtenir une isolation thermique performante, il est connu, par exemple dans un PIV, d'utiliser en tant qu'isolant thermique un aérogel (par exemple d'acide silicique) ou au moins un élément micro ou nanoporeux en général, tel que la silice précipitée et silice pyrogénée, constituant une "âme" poreuse (ou noyau) pour le PIV.

Ainsi disposera-t-on alors dans la première poche précitée un tel un élément micro ou nanoporeux, tout en y établissant une atmosphère contrôlée qui peut typiquement correspondre à une (dé)pression comprise entre moins de 10⁵ Pa et plus de 10⁻² Pa.

Mais, dans le temps les première et/ou deuxième poches peuvent fuir et le vide ne pas persister à la pression initiale. La conductivité thermique va en pâtir, alors même qu'un isolant thermique microporeux, voire nanoporeux, est un produit cher et délicat à mettre en œuvre et à utiliser.

EP 1647758 propose, dans ce contexte, un assemblage comprenant :
- au moins une première poche contenant un matériau isolant thermique et dans laquelle règne une première atmosphère (dite contrôlée),
- au moins une deuxième poche :
   -- qui entoure la première poche,
   -- qui est fermée périphériquement, à l'endroit d'une surface périphérique mineure, et
   -- dans laquelle règne une deuxième atmosphère (dite contrôlée),

Ceci peut notamment permettre de dispenser d'utiliser un isolant thermique « haut de gamme », tel qu'un aérogel, sans altérer notablement la conductivité thermique.

Mais la solution de EP 1647758 convient difficilement :
- à une fabrication en grande série, où, sans compromis sur la qualité d'isolation thermique de l'assemblage, de nombreuses pièces sont alors à déplacer et installer,
- et à des situations variées où on doit pouvoir adapter la conformation de l'assemblage en fonction des pièces ou éléments à isoler ou gérer thermiquement.

C'est pour tenir compte de cela qu'il est proposé dans l'invention que, ledit l'assemblage soit tel que dévoilé par les caractéristiques techniques de la revendication 1. Des modes avantageux de réalisation de l'assemblage selon l'invention sont dévoilés par les revendications dépendantes.

On aura compris que, sur une dite poche, la surface majeure occupe l'essentiel de son étendue (plus de 50%), tandis que la surface mineure qui s'étend typiquement en périphérie de la surface majeure, occupe une partie réduite (moins de 50%) de l'étendue totale de la poche. Si la poche est soudée pour être fermée, c'est typiquement en périphérie, à l'endroit de cette surface mineure qui forme là un rebord périphérique, que la soudure sera réalisée.

On aura également noté que le matériau isolant sera en lui-même thermiquement moins performant que les plus performants de ces matériaux, mais correspondra potentiellement à des isolants davantage communs et plus faciles à élaborer où obtenir dans le commerce que par exemple les aérogels.

Et cette moindre performance en termes de conductivité thermique propre aura été compensée :
- par la présence de la deuxième atmosphère contrôlée, et
- sur donc au moins l'essentiel desdites surfaces mineures et majeures respectives, par l'absence de tout matériau, ceci permettant que la deuxième poche joue pleinement ses rôles thermique et mécanique dans le respect des exigences de possible fabrication en grande série et de déplacement et installation dans des situations variées.

De la sorte, on peut viser :
- un assemblage moins onéreux et/ou plus facile à industrialiser, notamment en grande série (pour l'automobile et/ou l'aéronautique par exemple),
- un assemblage ayant des performances d'isolation et/ou de gestion thermique(s) élevées, notamment en termes de conductivité thermique globale,
- une sécurité de préservation de la première atmosphère contrôlée (interne) assumée, notamment du fait de la deuxième atmosphère qui l'entoure (au moins en partie),
- un choix élargi d'isolant thermique.

Bien que, comme précisé ci-avant, un gaz (tel le CO₂, ou l'Argon) ayant une faible conductivité thermique puisse remplacer un vide d'air, il est proposé que, dans l'assemblage :
- la première atmosphère contrôlée puisse être à une pression inférieure à celle de la deuxième atmosphère contrôlée (externe), et/ou
- la première atmosphère contrôlée soit différente de la deuxième atmosphère contrôlée et corresponde à un vide inférieur ou égal à 10 Pa.

Ainsi, en jouant sur le(s) degré(s) de vide, on pourra affiner les performances d'isolation et/ou de gestion thermique.

En outre, utiliser le vide permet plus facilement et à moindre coût de détecter une perte d'atmosphère contrôlée dans l'assemblage.

Enfin, utiliser des gaz tels le CO₂ ou l'Argon peut imposer des règles de mise en œuvre plus strictes qu'un vide d'air.

A ce sujet, il est d'ailleurs aussi proposé que ladite première atmosphère contrôlée puisse corresponde à un vide, de préférence secondaire, ayant une pression inférieure ou égale à 10⁻¹ Pa.

L'atteinte d'un tel vide, commun industriellement, permettra aisément et à coût réduit de réaliser un assemblage à haute performance d'isolation, avec des isolants thermiques courants.

Ace sujet, il est d'ailleurs aussi proposé que l'isolant thermique puisse présenter des cellules ouvertes de diamètre supérieur ou égal à 10 micron.

La sécurité mécanique de l'assemblage a également été prise en compte en liaison avec la haute performance d'isolation visée.

C'est pourquoi, il est aussi proposé que la deuxième poche (externe) comprenne une paroi métallique qui confinerait l'atmosphère.

Ceci sera préférable à ce que cette paroi métallique soit celle des ou de chaque première(s) poche(s). En effet, au pire les pressions dans les premières et deuxième poches s'équilibreraient, si les premières poches devenaient moins étanches dans le temps, alors même que la paroi métallique empêcherait quasiment tout risque réel de fuite depuis la deuxième poche (externe) vers l'atmosphère extérieur.

A priori, la paroi métallique présenterait une épaisseur comprise entre 0,01 mm et 3mm.

Un problème peut alors être d'obtenir une paroi à la fois résistante mécaniquement et en étanchéité, de relativement faible conductivité thermique et modelable à la forme probablement non plane souhaitée, ceci de façon économiquement satisfaisante et industriellement simple à mettre en œuvre en grande série pour l'automobile et/ou l'aéronautique par exemple.

Un compromis a été trouvé, avec une paroi métallique présentant une épaisseur comprise entre 0,05mm et moins d'1mm et choisie dans le groupe comprenant l'acier inoxydable, le titane l'aluminium et d'autres métaux, ou des alliages métalliques, à conductivité thermique inférieure à 100 mW/m.K à 20°C et dans un environnement sous pression atmosphérique.

Les premières poches pourraient comprendre au moins un film polymère (seul ou doublé métal) qui confinera l'atmosphère.

Ainsi, dans une situation de mise sous vide en particulier de ces premières poches (internes), leur(s)) paroi(s) pourra(ont) être définie(s) en fonction (d'abord) des conditions d'étanchéité plus poussée à y atteindre, le rôle notamment de protecteur mécanique étant davantage dévolu à ladite) deuxième poche (externe), les matériaux des premières et deuxième poches étant alors différents.

Concernant la dépression pouvant être prévue dans ladite deuxième poche, il est quoi qu'il en soit proposé, si mise en dépression il y a, que la deuxième atmosphère contrôlée corresponde alors à un vide primaire ayant une pression comprise entre moins de 10⁵ Pa et plus de 10⁻³ Pa.

Un tel vide primaire est aisé et peu onéreux à atteindre industriellement, y compris en grande série.

Concernant la réalisation des premières poches on pourra les prévoir successivement indépendantes les unes des autres ; en l'espèce donc non réunies deux à deux par une dite partie intermédiaire d'articulation.

Dans cette succession de premières poches, chacune pourra alors être fermée par scellement étanche à l'air et/ou les premières poches seront disjointes les unes des autres.

De la sorte, l'étanchéité pourra être assurée poche par poche, les poches différentiées aisément (en taille et/ou volume et/ou en constitution et/ou en disposition relative), ou encore fabriquées à un moment puis mise sur étagère pour une mise à disposition subséquente.

En alternative :
- lesdites (ou certaines au moins des) premières poches (internes) formeront un ensemble unique, de sorte que ces premières poches soient sous une dite première atmosphère commune, et présenteront pour cela un unique scellement étanche à l'air en périphérie de l'ensemble de ces premières poches réunies entre elles deux à deux par une partie intermédiaire d'articulation, ou
- lesdites premières poches pourront être réunies entre elles deux à deux par une soudure, une liaison mécanique (tel un clip), ou une liaison chimique (tel un adhésif).

La cohésion des premières poches entre elles sera ainsi atteinte.

En outre, les parties intermédiaires d'articulation de deux premières poches successives pourront alors se former d'elles-mêmes lors de la mise sous vide, du fait de la présence interne des éléments successifs d'isolant thermique autour, ou de part et d'autre, desquels seront alors situées ces parties intermédiaires d'articulation, suite à l'aspiration provoquée par la mise sous vide.

A noter encore que, si entre deux premières poches successives qu'elle réunit, la ou chaque partie intermédiaire s'étend continument d'une des premières poches jusqu'à la première poche suivante, on pourrait ainsi favoriser encore davantage une fabrication en grande série d'un même type donné d'assemblage.

Pour permettre une application dans des emplacements exigus et/ou de conformation complexe (angles, creux, bosses...), assurer un maximum de surface d'échange thermique et faciliter les manutentions et conditions de fabrication en série, il est aussi proposé :
- que la deuxième poche comprenne au moins un film polymère qui confine l'atmosphère,
- que les premières poches et la deuxième poche soient définies par des films polymères thermoformables,
- et que, dans lesdites premières poches :
   -- le ou chaque matériau isolant thermique définisse une structure poreuse en trois dimensions dont le film polymère suivra la forme, la structure poreuse étant interposée entre deux couples de surfaces majeures (S1 ci-après) des films polymères des premières poches et de la deuxième poche, respectivement, et
   -- les films polymères des premières poches et de la deuxième poche soient thermoformés à l'endroit desdites surfaces majeures (S1) respectives, entre lesquelles la structure poreuse, qui est en trois dimensions, présentera une forme cintrée et/ou des reliefs et/ou des creux.

En complément, le ou chaque matériau isolant thermique pourra être comprimé et ainsi être plus isolant thermique et plus facile à intégrer.

Sur le même sujet, il est aussi proposé:
- que le ou les matériaux isolants thermiques contenus dans les premières poches présente une première densité,
- qu'entre les premières poches et la deuxième poche soient interposée des deuxièmes structures thermiquement isolantes comprenant le même matériau isolant thermique que ci-dessus, ou un matériau isolant thermique différent, ayant de toute façon une deuxième densité,
- que la deuxième densité soit inférieure à la première densité, et
- que lesdits matériaux isolants thermiques contenus dans les premières poches sont superposés avec lesdites deuxièmes structures thermiquement isolantes.

« Poreux » (poreuse) désigne un matériau (ou une structure) d'isolation thermique possédant des interstices permettant le passage de l'air. Les matériaux poreux, à cellules ouvertes, inclut donc les mousses mais également les matériaux fibreux (tels que la laine de verre ou de roche). Les interstices de passage que l'on peut qualifier de pores ont des tailles inférieures à 1 ou 2mm, et de préférence à 10 micron.

Si nécessaire, les caractéristiques des solutions ici présentées seront encore mieux comprises et d'autres détails et avantages de celles-ci pourront apparaîtront encore à la lecture de la description qui suit, faite à titre d'exemple non limitatif et en référence aux dessins annexés, dans lesquels :
- les figures 1 et 3-7 sont des coupes schématiques, chacune correspondant, selon une variante, à la ligne de coupe I-I de la figure 2, avec des poches intérieures multiples se succédant, suivant une direction d'allongement de l'assemblage formant comme une bande,
- la figure 2 est un schéma extérieur en perspective de la forme que peut prendre l'assemblage selon l'une quelconque des autres figures (zone II figure 1 que l'in retrouve en variantes figures 4 à 7),
- les figures 4 à 7 montrent chacune schématiquement une réalisation possible agrandie, suivant ici quatre variantes, de la zone de l'assemblage (parties intermédiaires 15 ; 150 ci-après) dont est issue la flèche qui les lie,
- et figures 8,9 sont des coupes schématiques, comme les autres coupes, de deux variantes à doubles poches, mais à parois thermorfomées et isolants thermiques 3D.

A partir des figures, on peut effectivement constater que l'invention s'applique à un assemblage 1 comprenant :
- plusieurs premières poches 3 (3a, 3b, 3c sur les figures) contenant individuellement un isolant thermique 5, et
- au moins une deuxième poche 7 qui entoure toutes les premières poches 3.

Une première atmosphère contrôlée règne dans chaque première poche 3 et une deuxième atmosphère contrôlée, différente de la première, règne dans la deuxième poche 7.

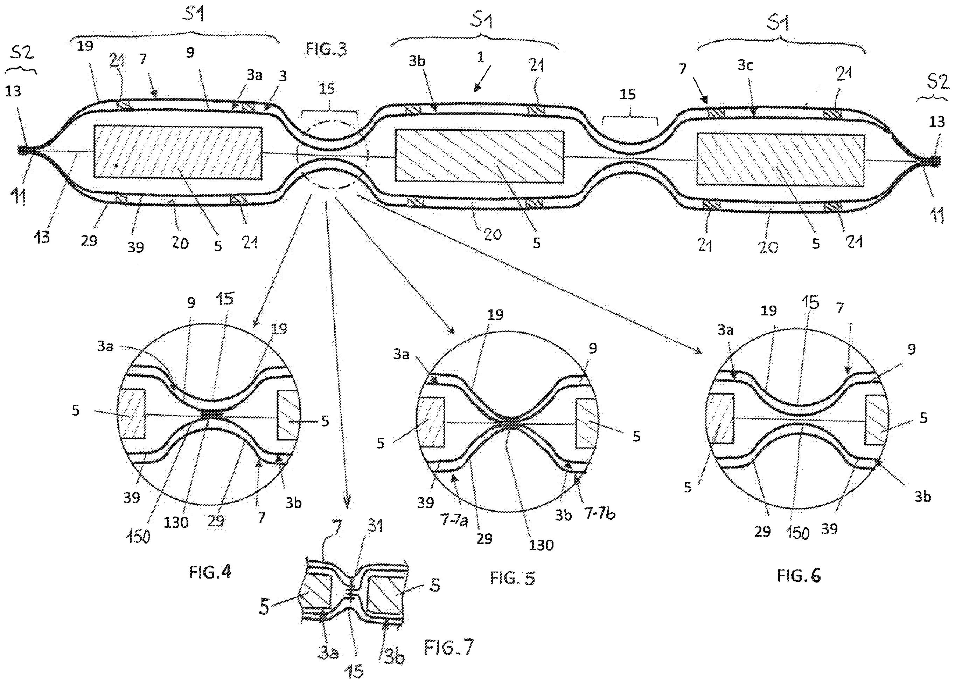

La deuxième poche est d'emblée unique ou l'est après qu'on ait soudées ensemble bout à bout plusieurs telles poches (telles 7-7a, 7-7b figure 5), en zones 15 ; voir ci-après. On évoque ci-après donc uniquement une deuxième poche unique, puisque que c'est ce qui apparaitra sur la pièce 1 finie.

La deuxième poche s'étend continument autour des premières poches 3 ; 3a, 3b, 3c à l'endroit de surfaces majeures respectives S1, et entoure toutes les premières poches jusqu'à la surface périphérique mineure S2 où la deuxième poche est fermée périphériquement : zone 13, rebord 11.

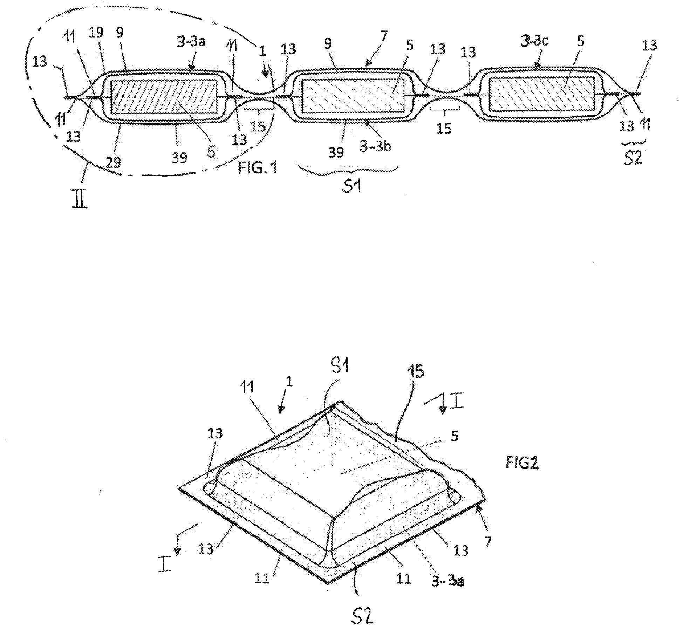

Sur l'essentiel au moins de la surface mineure S2 et des surfaces majeures respectives S1, les premières poches respectives et la deuxième poche sont :
- appliquées deux à deux l'une contre l'autre (par la dépression créée comme dans l'exemple des figures 1, 2 pour les surfaces S1, et le scellement périphérique, pour la surface S2) ; ou
- séparées, par un espace 20 vide (figure 3 à l'endroit des surfaces majeures S1) qui est donc dépourvu de tout matériau.

On aura compris que ces surfaces majeures respectives S1 (et donc les surfaces mineures S2 qui les complètent respectivement) concernent tant les premières poches que la deuxième poche, puisque la seconde entoure continument les premières.

L'espace 20 vide peut par exemple avoir été obtenu par des entretoises 21, tels que des pavés, interposées entre les parois 19, 29 et qui, très locales, n'occupent donc qu'une surface très mineure des surfaces majeures S1 ; voir figure 3.

On aura compris que chaque surface majeure S1 s'étend en face du matériau 5 correspondant et donc de la partie renflée des poches. La surface mineure S2, bien sûr de plus petite taille, s'étend à l'endroit du scellement périphérique 13. On pourrait aussi considérer que les parties intermédiaires 15 et/ou 150 (voir ci-après) forment d'autres surfaces mineures S2', avec S2 + ΣS2' < ΣS1 (Σ= somme des).

Ensemble, les premières et deuxième poches se présentent comme un assemblage définissant un panneau ayant donc deux côtés opposés.

Pour réaliser les premières ou deuxième poches, on peut prévoir, au lieu de deux demi-parois, une paroi unique pliée sur elle-même à une extrémité et qui entoure et isole la ou les poches concernée(s). Ces parois sont toutes au moins scellées de façon étanche à l'air en périphérie 11, sur tout le pourtour de cette périphérie.

On pourrait aussi prévoir que les poches 3,7, respectivement intérieures et extérieure, soient formées d'une unique paroi ou feuille, flexible ou déformable, pliée trois fois sur elle-même aux extrémités de l'assemblage 1, de sorte à former les premières poches 3 entourées par la deuxième poche 7.

Selon l'invention :
- la première atmosphère contrôlée est différente de la deuxième atmosphère contrôlée, et
- l'isolant thermique 5 présente de préférence des cellules ouvertes de diamètre supérieur ou égal à 1 micron.

En effet, l'isolant thermique 5 n'a pas besoin de présenter des pores de tailles très faibles (micro voire nanopores), alors que cela est requis quand un vide moins poussé est classiquement appliqué dans la poche dans laquelle il est directement confiné.

Les solutions ici présentées permettent en effet de compenser, à coefficient d'isolation thermique quasi identique, une moindre porosité au gaz de confinement (vide notamment) de l'isolant thermique 5 par une dite première atmosphère contrôlée plus faible (vide plus poussé) que dans les cas connus, avec de surcroît présence de ladite deuxième poche 7 extérieure.

La première atmosphère contrôlée présente dans les premières poches 3 ; 3a, 3b, 3c est ici à une pression inférieure à celle de la deuxième atmosphère contrôlée présente dans la deuxième poche 7.

Ainsi, on préférera que dans chaque première poche 3 contenant un isolant thermique 5, il règne une dépression. Par contre, l'hypothèse d'au moins une deuxième atmosphère contrôlée définie par (au moins) un gaz de conductivité thermique inférieure à celle de l'air ambiant demeurera toujours possible, même si une dépression (moindre donc vis-à-vis de celle dans les premières poches 3) sera préférée dans la deuxième poche 7.

D'autant plus avec un isolant thermique 5 à cellules ouvertes de diamètre important, notablement supérieur à 1 micron, par exemple supérieur à 10 voire 100 microns, un résultat performant en termes de préservation d'une faible conductivité thermique (qui pourra alors être inférieure ou égale à 40W/m·K à la pression atmosphérique) pourra être maintenu avec une première atmosphère contrôlée correspondant à un vide ayant une pression inférieure ou égale à 10⁻¹ Pa, donc (quasiment) comme avec un vide moins poussé et un isolant thermique 5 qui serait nanoporeux (donc à cellules de diamètre beaucoup plus petit).

Il est d'ailleurs alors proposé que l'isolant thermique 5 présente des cellules ouvertes de diamètre supérieur ou égal à 10 microns. L'isolant thermique 5 peut alors par exemple être formé d'une mousse polyuréthane (PU) ou polystyrène (PS) par exemple ou d'un matériau fibreux (tel que la laine de verre ou de roche) .

Pour mémoire, il est rappelé qu'un isolant thermique à cellules ou alvéoles ouvertes pourra être un isolant qui ne se tasse pas qui n'absorbe pas l'eau, et qui est perméable à la vapeur d'eau.

Dans une solution à cellules ou alvéoles fermée, on est davantage sur une solution à isolant à pulvériser, protection pare-air, résistant à la pénétration d'humidité, avec une plus faible perméabilité à la vapeur d'eau.

Avec des cellules ou alvéoles ouvertes, on a un matériau respirant, plus léger et flexible, une perméabilité élevée à la vapeur.

La première atmosphère sera même encore plus favorablement un vide inférieur ou égal à 10⁻², voire 10⁻³ Pa, donc un vide secondaire.

Parmi les possibilités pour réaliser la(les) paroi(s) de la deuxième poche 7, telles les parois 19, 29 figure 1 ou 3, on notera en particulier celle d'une réalisation métallique qui confinera donc l'atmosphère.

Une réalisation sous forme de deux feuilles métalliques, ou de deux portions d'une même feuille métallique (feuille ou paroi repliée comme évoqué), réservant entre elles un espace est notamment proposée. La ou chaque feuille métallique pourra en particulier être d'épaisseur inférieure à 1mm et être choisie dans le groupe comprenant l'acier inoxydable, le titane l'aluminium et d'autres métaux ou alliages métalliques à conductivité thermique inférieure à 100 mW/m.K, ceci à 20°C et dans un environnement sous pression atmosphérique.

Avec une épaisseur de paroi métallique comprise entre 0,01mm et 3mm, on associera facilités de mise en œuvre et de conformation si nécessaire non plane, résistance mécanique et performance en termes de conductivité thermique (λ).

En alternative, des parois de deuxième poche 7 consistant en des films (donc plus fins que des feuilles) polymères doublés d'aluminium sous forme par exemple laminée (film global de l'ordre d'une dizaine de micromètre d'épaisseur) ou métallisée (par exemple par dépôt sous vide d'un film de quelques dizaines de nanomètre), peuvent être envisagées.

Mais il pourra être préféré réserver cette solution à parois, telles les deux repérées 9, 39 figure 1, de confinement à base de film(s) polymère(s) aux premières poches 3 qui ne sont pas exposées directement aux contraintes et agressions (telles les frottements) de l'environnement extérieur.

Dans le contexte de l'invention, on pourra se permettre, toujours à performances comparables en termes de faible conductivité thermique), de prévoir que la deuxième atmosphère corresponde certes à un vide, mais uniquement primaire, avec même de préférence une pression comprise entre moins de 10⁵ Pa et plus de 10⁻² Pa, voire probablement de 10⁻¹Pa.

Pour confiner l'atmosphère dans les premières et deuxième poches 3, le scellement 13 en périphérie 11 sera hermétique.

Par ailleurs, comme illustré sur les figures, deux premières poches successives sont réunies par une partie intermédiaire où lesdites poches peuvent s'articuler l'une par rapport à l'autre. Cette partie intermédiaire est formée sur la deuxième poche 7 (zone 15) et peut être l'être aussi entre deux premières poches successives (zone d'articulation 150).

Une poche étant, ou comprenant, une zone entourant un isolant thermique 5 et dans laquelle règne une atmosphère contrôlée, on a donc, dans chaque assemblage 1, et notamment ceux illustrés :
- plusieurs premières poches 3 ; 3a, 3b, 3c successives contenant donc chacune un matériau isolant thermique 5, et
- au moins une deuxième poche 7, ou 7-7a et 7-7b figure 5 figurant deux poches 7a, 7b successives réunies en une seule par un scellement 130 en partie intermédiaire 15).

Un détail concernant les parties intermédiaires 15, 150 de l'assemblage 1 de la figure 3 est figuré dans quatre modes possibles de réalisation figures 4-7, l'illustration de la zone marquée figure 3 étant représentée figure 6.

Un aspect commun est que, dans les réalisations des figures 3-6, tant les premières poches 3a, 3b, 3c que la deuxième poche 7 (ou 7a, 7b, 7c réunies) sont formées par au moins une paroi ou feuille qui forme tant les poches que les parties intermédiaires 15, 150 tant des premières poches (parties 150) que de la deuxième poche (parties 15).

De façon différente, dans la réalisation de la figure 1, les premières poches 3a, 3b, 3c sont donc individualisées, ou disjointes. Seule la deuxième poche 7 est formée par au moins une telle paroi ou feuille qui forme tant les parties (de surfaces S1 chacune) qui entourent les premières poches 3a, 3b, 3c et leurs matériaux 5 que les parties intermédiaires 15 de cette deuxième poche.

Chaque première poche présente un scellement périphérique 13 (ou 130 figures 4, 5). Il y a une première atmosphère par poche 3a, 3b, 3c et au moins une deuxième atmosphère contrôlée pour l'ensemble de la deuxième poche, avec dans cette réalisation, un scellement 13 unique, périphérique.

En d'autres termes, il n'y a pas là de scellement en zones 15 entre deux surfaces majeures S1 adjacentes ou successives de la deuxième poche. Dans les réalisations des figures 4 et 6, c'est la même chose. Toutefois, dans la réalisation de la figure 4, on trouve un scellement 130 entre deux premières poches, ici 3a, 3b, adjacentes ou successives.

Dans la réalisation de la figure 6, on ne trouve aucun scellement intermédiaire entre deux premières poches. Ainsi, comme schématisé figure 3, il n'y a qu'un scellement 13 unique, périphérique et commun à l'ensemble formé par les premières poches et la deuxième poche.

Dans la réalisation de la figure 5, on trouve un scellement 130 entre tant deux premières poches, ici 3a, 3b, que deux parties, ici 7a, 7b de deuxième poche, adjacentes ou successives. Chaque scellement 130, situé donc en parties intermédiaires 15, 150 peut être commun aux premières et deuxièmes poches. S'il y avait initialement plusieurs deuxièmes poches, les scellements 130 les ont fusionnées ensemble, en une deuxième poche 7 unique.

Concernant les scellements 13, 130 (bien sûr hermétiques), ils pourront consister en une ou plusieurs lignes de soudage, voire en un scellement chimique (colle typiquement).

En pratique, on préfèrera un soudage à un brasage, ceci au moins pour l'étanchéité des premières poches 3 ; 3a, 3b, 3c et donc l'établissement et la préservation dans le temps du vide secondaire plus poussé (s'il est prévu), l'expression « soudage » excluant alors tout brasage, conformément au sens reconnu dans la technique. Dans les soudages ici prévus, il n'y aura alors pas de matériau d'apport et/ou pas de fusion des bords assemblés. Chaque soudage sera continu au moins donc pour le scellement des premières poches (il ne sera donc pas de type points par points, « spot welding » en anglais). En effet, il s'est avéré que notamment un brasage par points, au moins pour établir le vide secondaire plus poussé, ne convenait pas du fait notamment de l'association des deux atmosphères.

Dans la réalisation de la figure 7, les premières poches, ici 3a, 3b sont réunies entre elles deux à deux par une liaison mécanique 31. Il peut s'agir par exemple de clips ou de liens tels que des adhésifs double face qui pourraient assurer une liaison mécanique mais aussi une possible herméticité de liaison entre les premières poches. Entre deux premières poches successives qu'elle réunit, la deuxième poche 7 forme toujours des parties intermédiaires 15, où lesdites poches peuvent s'articuler entre elles.

On pourra remarquer l'intérêt en termes de rapidité de réalisation de l'assemblage, standardisation du processus de fabrication et flexibilité si, entre deux premières poches successives 3 qu'elle réunit, la ou chaque partie intermédiaire 15 de deuxième poche 7 s'étend continument d'une des premières poches, telle 3a, jusqu'à la première poche suivante, telle 3b, d'autant qu'il peut en être de même pour les parties intermédiaires 150 d'articulation des premières poches entre elles ; voir par exemple figures 1,3.

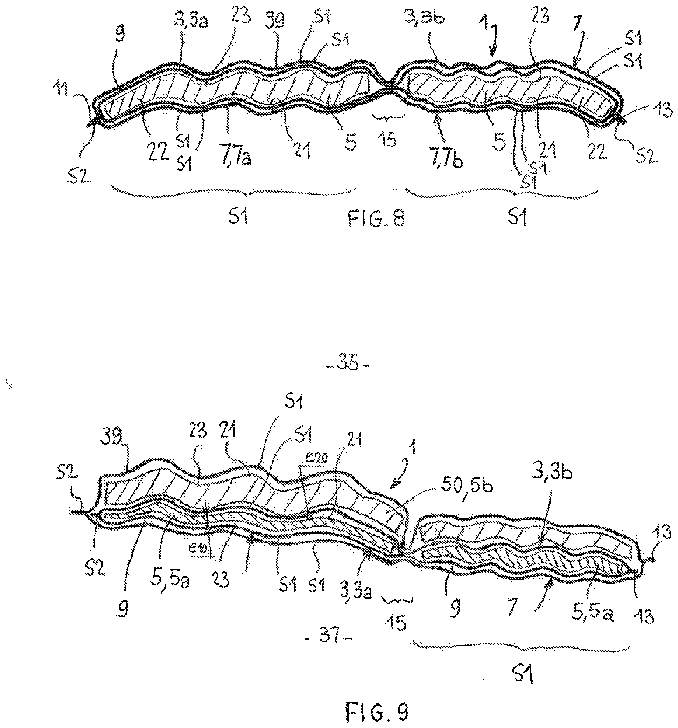

Sur les figures 8, 9, on pourra aussi remarquer deux solutions pour, comme déjà évoqué, assurer une mise en place dans des emplacements exigus et/ou de conformation complexe (angles, creux, bosses...), en maximisant les surfaces d'échange thermique.

On y retrouve bien sûr la partie intermédiaire 15 « souple » que la deuxième poche 7 ; 7a, 7b forme entre deux premières poches successives qu'elle réunit.

Mais il y est surtout proposé, un dit assemblage 1, dans lequel :
- la deuxième poche 7 ; 7a, 7b est faite, comme les premières poches 3 ; 3a, 3b d'au moins un film polymère 39 qui s'étend « continument », comme déjà précisé, et qui confine l'atmosphère,
- et lesdits de films polymères (donc polymères seuls ou doublés métal) 9, 39 de ces poches sont thermoformables.

En outre, dans les premières poches :
- le ou chaque matériau isolant thermique 5 définit une structure poreuse en trois dimensions dont le film polymère (9, 39) suit la forme, la structure poreuse (5) étant interposée entre deux couples de surfaces majeures (S1) des films polymères 9, 19 des premières poches et de la deuxième poche, respectivement, et - ces films polymères respectifs 9, 19 sont thermoformés à l'endroit desdites deux surfaces majeures (S1) respectives, entre lesquelles chaque structure poreuse 5, qui est en trois dimensions, présente donc, comme précédemment, une forme cintrée 22 et/ou des reliefs 21 et/ou des creux 23.

On aura compris que l'expression « en trois dimensions » (3D) équivaut, comme dans le sens commun, à non (intégralement) plan. En anglais, les creux et reliefs (ou bosses) des structures poreuses 5 (et plus généralement de l'assemblage 1, puisque, thermoformés autour de ces structures, les films polymères respectifs 9, 19 en épousent les contours) peuvent être traduits par « embossements ».

Les structures poreuses 5 pourront avantageusement être ici à base de poudre ou se présenter comme des structures textiles fibreuses et ainsi comprendre des fibres polymères, minérales (verre, basait par exemple) ou naturelles (cellulose, lin, chanvre par exemple). Un feutre sera intéressant pour sa compression intrinsèque (on désigne par feutre une structure comprimée, non tissée, obtenue en pressant et en agglutinant des fibres). On évitera par contre d'utiliser une mousse qui peut perdre de sa qualité d'isolant thermique à partir d'un certain degré de compression.

Les mises en forme 3D respectives des assemblages 1 des solutions des figures 8, 9 pourront être avantageusement réalisées dans des moules de mise en forme, après fermeture de toutes les poches 3, 7 et réalisations desdites première et deuxième atmosphères contrôlées. Dans les moules, les structures poreuses 5 pourront avantageusement être comprimées.

Un autre aspect performant a été schématisé figure 9. Il s'agit d'une solution où on va pouvoir traiter des problèmes tant thermique qu'acoustique de façon affinée.

Plus précisément, il est proposé d'abord de reprendre l'assemblage précité à parties intermédiaires 15 et avec donc les structures poreuses 5 dans leurs enveloppes 3 formées par la paroi barrière 9. Cette paroi est toujours thermoformée à l'endroit desdites deux surfaces majeures (S1) entre lesquelles chaque structure poreuse 5, qui est en trois dimensions, présente donc une forme cintrée et/ou des reliefs et/ou des creux, comme schématisé.

Toutefois, dans cette solution il est en outre prévu :
- que les structures poreuses 5 définissent des premières structures poreuses comprenant un matériau poreux 5a ayant une première densité,
- qu'en outre existe une ou plusieurs deuxièmes structures poreuses 50 comprenant le même matériau poreux (5a), ou un matériau poreux 5b différent, ayant une deuxième densité.

La deuxième densité est inférieure à la première densité, et, de part et d'autre de la partie 15 repérée figure 9, les premières et deuxième(s) structures poreuses 5, 50 sont superposées.

Superposé a ici pour sens qu'on a ainsi une double épaisseur : celles cumulées des structures poreuses 5, 50 entre les zones 35 et 37 qui s'étendent de part et d'autre de l'assemblage 1, dans le sens de son épaisseur. La superposition n'est pas nécessairement dans un plan horizontal ; elle peut être par exemple dans un plan vertical, comme par exemple dans une portière d'automobile dans laquelle l'assemblage 1 serait alors dressé verticalement. A noter à ce sujet que d'autres applications que sur un véhicule sont possibles ; dans le bâtiment par exemple.

Ceci précisé, on notera encore :
- que chaque deuxième structure poreuse 50 présente une forme cintrée et/ou des reliefs 21 et/ou des creux 23, et
- que les premières poches 3 ; 3a, 3b et la deuxième structure poreuse 50 sont donc :
   -- enfermés ensemble dans la seconde poche 7 à paroi 39,
   -- et interposés entre deux surfaces majeures S1 de ladite paroi 39, cette paroi 39 étant thermoformée à l'endroit desdites deux surfaces majeures S1.

On aura compris que ces deux surfaces majeures sont ici l'image sur l'enveloppe 7 et sa paroi 39 des deux surfaces majeures S1 sur l'enveloppe 37 et sa paroi 9. La zone périphérique mineure/marginale en terme de surface, ici S2, demeure.

La deuxième enveloppe 7 n'est pas nécessairement sous vide. Chaque deuxième structure poreuse 50 pourrait être logée dans une troisième enveloppe sous vide.

Typiquement moins comprimée que la première structure poreuse 5, la deuxième structure poreuse 50 présentera une épaisseur e20 supérieure à l'épaisseur e10 de la première structure poreuse 5 qu'elle double en épaisseur, ceci étant à considérer partout ou sur l'essentiel au moins de la plus grande des surfaces des structures poreuses 5, 50.

L'épaisseur e20 peut être de 3 à 15mm. L'épaisseur e10 peut être de 0.5 à 2.5mm. La première densité peut être de plus de 300 à 800kg/m³ ; la deuxième densité peut être de 100 à moins de 300kg/m³.

Chaque première structure poreuse 5 assure des isolations thermique et acoustique pertinentes. Chaque deuxième structure poreuse 50 assure une isolation thermique renforcée et une isolation acoustique plus limitée. On obtient ainsi une solution hybride avec une assemblage lourd (à effet de masse) qui absorbe dans les basses fréquences (20 à 200 Hz).

## Revendications

1. Assemblage (1) comprenant :
- plusieurs premières poches (3 ;3a,3b,3c) contenant au moins un matériau isolant thermique (5) et dans laquelle règne une première atmosphère contrôlée, le ou chaque matériau isolant thermique (5) présentant des cellules ouvertes de diamètre supérieur ou égal à 1 micron,
- au moins une deuxième poche (7 ;7a,7b,7c) :
-- qui entoure les premières poches (3 ;3a,3b,3c),
-- dans laquelle règne une deuxième atmosphère contrôlée, et
-- qui forme une partie intermédiaire (15), entre deux premières poches successives qu'elle réunit,
**caractérisé en ce que** :
- la ou chaque dite partie intermédiaire (15) est adaptée pour que lesdites premières poches (3 ;3a,3b,3c) puissent s'y articuler entre elles,
- la deuxième poche (7 ;7a,7b,7c), qui est unique et qui est fermée périphériquement, à l'endroit (11) d'une surface périphérique mineure (S2), s'étend continument autour de toutes les premières poches (3 ;3a,3b,3c) à l'endroit de surfaces majeures (S1) respectives, jusqu'à la surface périphérique mineure (S2),
- sur l'essentiel au moins desdites surfaces mineures (S2) et majeures (S1) respectives, la deuxième poche et les premières poches respectives sont :
-- appliquées deux à deux l'une contre l'autre, ou
-- séparées par un espace vide, dépourvu donc de tout matériau.

2. Assemblage selon la revendication 1, dans lequel la première atmosphère contrôlée est différente de la deuxième atmosphère contrôlée et correspond à un vide inférieur ou égal à 10 Pa.

3. Assemblage selon l'une des revendications précédentes, dans lequel la première atmosphère contrôlée est à une pression inférieure à celle de la deuxième atmosphère contrôlée.

4. Assemblage selon l'une des revendications précédentes, dans lequel : la première atmosphère contrôlée correspond à un vide ayant une pression inférieure ou égale à 10⁻¹ Pa, et/ou
- la deuxième atmosphère contrôlée correspond à un vide primaire ayant une pression comprise entre moins de 10⁵ Pa et plus de 10⁻³ Pa.

5. Assemblage selon l'une des revendications précédentes, dans lequel l'isolant thermique (5) présente des cellules ouvertes de diamètre supérieur ou égal à 10 micron.

6. Assemblage selon l'une des revendications précédentes, dans lequel les premières poches (3 ; 3a, 3b, 3c) comprennent au moins un film polymère (9,39) qui confine l'atmosphère.

7. Assemblage selon l'une des revendications précédentes, dans lequel certaines au moins des premières poches (3 ; 3a, 3b, 3c) forment un ensemble unique, de sorte que ces premières poches sont sous une dite première atmosphère contrôlée commune, et présentent pour cela un unique scellement (13) étanche à l'air en périphérie de l'ensemble de ces premières poches réunies entre elles deux à deux par une partie intermédiaire (150) d'articulation.

8. Assemblage selon l'une des revendications 1 à 6, dans lequel les premières poches (3 ; 3a, 3b, 3c) sont réunies entre elles deux à deux par une soudure, une liaison mécanique, ou une liaison chimique.

9. Assemblage selon l'une des revendications 1 à 6, dans lequel les premières poches (3 ; 3a, 3b, 3c) sont disjointes les unes des autres.

10. Assemblage selon l'une des revendications précédentes, dans lequel, entre deux premières poches successives qu'elle réunit, la ou chaque partie intermédiaire (15) de la deuxième poche (7 ; 7a, 7b, 7c) s'étend continument d'une des premières poches jusqu'à la première poche suivante.

11. Assemblage selon l'une des revendications précédentes, dans lequel la deuxième poche (7 ; 7a, 7b, 7c) comprend une paroi métallique (19, 29, 49) qui confine l'atmosphère.

12. Assemblage selon la revendication 6, seule ou en combinaison avec l'une des revendications 7 à 11, dans lequel :
- la deuxième poche (7 ; 7a, 7b, 7c) comprend au moins un film polymère (39) qui confine l'atmosphère,
- les films polymères des premières poches (3 ; 3a, 3b, 3c) et de la deuxième poche sont thermoformables,
- dans lesdites premières poches (3 ; 3a, 3b, 3c) :
-- le ou chaque matériau isolant thermique (5) définit une structure poreuse en trois dimensions dont le film polymère (9, 39) suit la forme, la structure poreuse (5) étant interposée entre deux couples de surfaces majeures (S1) des films polymères des premières poches et de la deuxième poche, respectivement, et
-- les films polymères des premières poches et de la deuxième poche sont thermoformés à l'endroit desdites deux surfaces majeures (S1) respectives, entre lesquelles la structure poreuse (5), qui est en trois dimensions, présente une forme cintrée et/ou des reliefs (21) et/ou des creux (23).

13. Assemblage selon la revendication 12, dans lequel le ou chaque matériau isolant thermique (5) est comprimé.

14. Assemblage selon l'une quelconque des revendications précédentes, dans lequel :
- le ou les matériaux isolants thermiques (5, 5a) contenus dans les premières poches présente une première densité,
- entre les premières poches (3 ; 3a, 3b, 3c) et la deuxième poche (7 ; 7a, 7b, 7c) sont interposée des deuxièmes structures thermiquement isolantes (50) comprenant le même matériau isolant thermique (5a), ou un matériau isolant thermique (5b) différent, ayant une deuxième densité,
- la deuxième densité est inférieure à la première densité, et
- les matériaux isolants thermiques (5, 50) contenus dans les premières poches sont superposés avec les deuxièmes structures thermiquement isolantes.

## Patentansprüche

1. Anordnung (1), enthaltend:
- mehrere erste Taschen (3; 3a, 3b, 3c), die zumindest ein wärmeisolierendes Material (5) enthalten und in denen eine erste kontrollierte Atmosphäre herrscht, wobei das bzw. jedes wärmeisolierende Material (5) offene Zellen mit einem Durchmesser größer oder gleich 1 Mikron aufweist,
- zumindest eine zweite Tasche (7; 7a, 7b, 7c),
-- die die ersten Taschen (3; 3a, 3b, 3c) umgibt,
-- in der eine zweite kontrollierte Atmosphäre herrscht, und
-- die einen Zwischenabschnitt (15) zwischen zwei aufeinanderfolgenden ersten Taschen bildet, welche sie verbindet,
**dadurch gekennzeichnet, dass**
- der bzw. jeder Zwischenabschnitt (15) so ausgelegt ist, dass die ersten Taschen (3; 3a, 3b, 3c) zueinander gelenkig mit diesem verbunden werden können,
- die zweite Tasche (7; 7a, 7b, 7c), die einzeln vorliegt und an der Stelle (11) einer Nebenumfangsfläche (S2) umfänglich geschlossen ist, sich an der Stelle von jeweiligen Hauptflächen (S1) kontinuierlich um alle ersten Taschen (3; 3a, 3b, 3c) herum bis zur Nebenumfangsfläche (S2) erstreckt,
- über zumindest einen wesentlichen Teil der jeweiligen Neben- (S2) und Hauptflächen (S1) die zweite Tasche und die jeweiligen ersten Taschen
-- paarweise aneinander angelegt oder
-- durch einen leeren, also materialfreien, Raum getrennt sind.

2. Anordnung nach Anspruch 1, wobei die erste kontrollierte Atmosphäre sich von der zweiten kontrollierten Atmosphäre unterscheidet und einem Vakuum von weniger als oder gleich 10 Pa entspricht.

3. Anordnung nach einem der vorhergehenden Ansprüche, wobei die erste kontrollierte Atmosphäre einen niedrigeren Druck aufweist als die zweite kontrollierte Atmosphäre.

4. Anordnung nach einem der vorhergehenden Ansprüche, wobei
- die erste kontrollierte Atmosphäre einem Vakuum mit einem Druck von weniger als oder gleich 10⁻¹ Pa entspricht und/oder
- die zweite kontrollierte Atmosphäre einem Feinvakuum mit einem Druck zwischen weniger als 10⁵ Pa und mehr als 10⁻³ Pa entspricht.

5. Anordnung nach einem der vorhergehenden Ansprüche, wobei der Wärmeisolator (5) offene Zellen mit einem Durchmesser von mehr als oder gleich 10 Mikron aufweist.

6. Anordnung nach einem der vorhergehenden Ansprüche, wobei die ersten Taschen (3; 3a, 3b, 3c) zumindest eine Polymerfolie (9, 39) aufweisen, die die Atmosphäre einschließt.

7. Anordnung nach einem der vorhergehenden Ansprüche, wobei zumindest einige der ersten Taschen (3; 3a, 3b, 3c) eine einzelne Baugruppe bilden, so dass diese ersten Taschen unter einer gemeinsamen ersten kontrollierten Atmosphäre stehen, und zu diesem Zweck eine einzelne luftdichte Dichtung (13) am Umfang der Baugruppe dieser ersten Taschen aufweisen, die paarweise durch einen dazwischenliegenden Anlenkabschnitt (150) miteinander verbunden sind.

8. Anordnung nach einem der Ansprüche 1 bis 6, wobei die ersten Taschen (3; 3a, 3b, 3c) durch eine Schweißnaht, eine mechanische Verbindung oder eine chemische Verbindung paarweise miteinander verbunden sind.

9. Anordnung nach einem der Ansprüche 1 bis 6, wobei die ersten Taschen (3; 3a, 3b, 3c) voneinander getrennt sind.

10. Anordnung nach einem der vorhergehenden Ansprüche, wobei sich der bzw. jeder Zwischenabschnitt (15) der zweiten Tasche (7; 7a, 7b, 7c) zwischen zwei aufeinanderfolgenden ersten Taschen, die er verbindet, kontinuierlich von einer der ersten Taschen zur nächsten ersten Tasche erstreckt.

11. Anordnung nach einem der vorhergehenden Ansprüche, wobei die zweite Tasche (7; 7a, 7b, 7c) eine Metallwandung (19, 29, 49) aufweist, die die Atmosphäre einschließt.

12. Anordnung nach Anspruch 6, allein oder in Kombination mit einem der Ansprüche 7 bis 11, wobei:
- die zweite Tasche (7; 7a, 7b, 7c) zumindest eine Polymerfolie (39) aufweist, die die Atmosphäre einschließt,
- die Polymerfolien der ersten Taschen (3; 3a, 3b, 3c) und der zweiten Tasche thermoformbar sind,
- in den ersten Taschen (3; 3a, 3b, 3c)
-- das bzw. jedes wärmeisolierende Material (5) eine dreidimensionale poröse Struktur definiert, deren Polymerfolie (9, 39) der Form folgt, wobei die poröse Struktur (5) zwischen zwei Paaren von Hauptflächen (S1) der Polymerfolien der ersten Taschen bzw. der zweiten Tasche angeordnet ist, und
-- die Polymerfolien der ersten Taschen und der zweite Tasche an der Stelle der beiden jeweiligen Hauptflächen (S1) thermogeformt sind, zwischen denen die dreidimensionale poröse Struktur (5) eine gekrümmte Form und/oder Reliefs (21) und/oder Vertiefungen (23) aufweist.

13. Anordnung nach Anspruch 12, wobei das bzw. jedes wärmeisolierende Material (5) komprimiert ist.

14. Anordnung nach einem der vorhergehenden Ansprüche, wobei
- das bzw. die in den ersten Taschen enthaltenen wärmeisolierenden Materialien (5, 5a) eine erste Dichte aufweisen,
- zwischen den ersten Taschen (3; 3a, 3b, 3c) und der zweiten Tasche (7; 7a, 7b, 7c) zweite wärmeisolierende Strukturen (50) eingefügt sind, die das gleiche wärmeisolierende Material (5a) oder ein anderes wärmeisolierendes Material (5b) mit einer zweiten Dichte enthalten,
- die zweite Dichte geringer ist als die erste Dichte, und
- die in den ersten Taschen enthaltenen wärmeisolierenden Materialien (5, 50) mit den zweiten wärmeisolierenden Strukturen überlagert sind.

## Claims

1. An assembly (1) comprising:
- a plurality of first pockets (3;3a,3b,3c) containing at least one thermally insulating material (5) and in which a first controlled atmosphere prevails, the or each thermally insulating material (5) having open cells with a diameter greater than or equal to 1 micron,
- at least one second pocket (7;7a,7b,7c):
-- which surrounds the first pockets (3 ;3a,3b,3c),
-- in which a second controlled atmosphere prevails, and
-- which forms an intermediate part (15), between two successive first pockets that the intermediate part joins together,
**characterized in that**:
- the or each said intermediate part (15) is adapted to allow said pockets to be hinged with respect to one another,
- the second pocket (7; 7a,7b,7c), of which there is only one, and which is peripherally closed at a location (11) of a minor peripheral surface (S2), continuously extends around all the first pockets (3;3a,3b,3c) at locations of respective major surfaces (S1), up to the minor peripheral surface (S2),
- on at least a main part of said respective minor (S2) and major (S1) surfaces, the respective second pocket and first pockets are:
-- applied against one another in pairs, or
-- separated by an empty space, which thus includes no material.

2. The assembly according to claim 1, wherein the first controlled atmosphere is different from the second controlled atmosphere and corresponds to a vacuum less than or equal to 10Pa.

3. The assembly according to one of the preceding claims, wherein the first controlled atmosphere is at a lower pressure than the second controlled atmosphere.

4. The assembly according to one of the preceding claims, wherein:
- the first controlled atmosphere is a vacuum having a pressure less than or equal to 10⁻¹Pa, and/or
- the second controlled atmosphere corresponds to a primary vacuum having a pressure ranging between less than 10⁵Pa and more than 10⁻³Pa.

5. The assembly according to one of the preceding claims, wherein the thermal insulation (5) has open cells with a diameter greater than or equal to 10 microns.

6. The assembly according to one of the preceding claims, wherein the first pockets (3; 3a, 3b, 3c) comprise at least one polymeric film (9, 39) which confines the atmosphere.

7. The assembly according to one of the preceding claims, wherein at least some of the first pockets (3; 3a, 3b, 3c) form a single assembly, so that said first pockets are under a common first controlled atmosphere and for this purpose have a single airtight seal (13) at a periphery of all said first pockets joined together in pairs by one said intermediate hinge part (150).

8. The assembly according to one of claims 1 to 6, wherein the first pockets (3; 3a, 3b, 3c) are joined to each other by a weld, a mechanical connection or a chemical bonding.

9. The assembly according to one of claims 1 to 6, wherein the first pockets (3; 3a, 3b, 3c) are separated from each other.

10. The assembly according to one of the preceding claims, wherein, between two successive first pockets which the intermediate part joins together, the or each intermediate part (15) of the second pocket (7; 7a, 7b, 7c) continuously extends from one of the first pockets to the next first pocket.

11. The assembly according to one of the preceding claims, wherein the second pocket (7; 7a, 7b, 7c) comprises a metal wall (19, 29, 49) which confines the atmosphere.

12. The assembly according to claim 6 alone or in combination with one of claims 7 to 11, wherein:
- the second pocket (7;7a,7b,7c) comprises at least one polymeric film (39) which confines the atmosphere,
- the polymeric films of the first pockets (3;3a,3b,3c) and the second pocket are thermoformable,
- in said first pockets (3;3a,3b,3c):
-- the or each thermally insulating material (5) defines a three-dimensional porous structure, the shape of which is followed by the polymeric film (9,39), the porous structure (5) being interposed between two pairs of major surfaces (S1) of the polymeric films of the first pockets and the second pocket, respectively, and
-- the polymeric films of the first pockets and of the second pocket are thermoformed at said two respective major surfaces (S1), between which the porous structure (5), which is three-dimensional, has a curved shape and/or reliefs (21) and/or recesses (23).

13. The assembly according to claim 12, wherein the or each thermally insulating material (5) is compressed.

14. An assembly according to any one of the preceding claims, wherein:
- the thermally insulating material(s) (5.5a) contained in the first pockets has/have a first density,
- between the first pockets (3; 3a, 3b, 3c) and the second pocket (7; 7a, 7b, 7c) are interposed second thermally insulating structures (50) comprising the same insulating material (5a) or a different thermally insulating material (5a) having a second density,
- the second density is lower than the first density, and
- the thermally insulating materials (5,50) contained in the first pockets are overlaid with the second thermally insulating structures.
